# EUROPEAN PATENT SPECIFICATION

(11) **EP 4 687 028 B1**
(45) Date of publication and mention of the grant of the patent: **16.09.2026**
(21) Application number: 24191514.9
(22) Date of filing: 29.07.2024
(51) Int. Cl.: G06F 8/30, G06N 3/0475, G06N 20/00

(54) **SYSTEM AND METHODS FOR SCALABLE GUARD RAILS FOR LLMS IN CODE GENERATION**
SYSTEM UND VERFAHREN FÜR SKALIERBARE SCHUTZGELÄNDER FÜR LLMS IN DER CODEERZEUGUNG
SYSTÈME ET PROCÉDÉS POUR RAILS DE GARDE ÉVOLUTIFS POUR LLMS DANS LA GÉNÉRATION DE CODE

(43) Date of publication of application: 04.02.2026
(73) Proprietor: evolutionID GmbH, 80638 München (DE)
(72) Inventor: Arjmandi, Mohsen, 80638 München (DE)
(74) Representative: Lohr, Jöstingmeier & Partner Patent- und Rechtsanwälte mbB

(56) References cited:
- SHUBHAM UGARE ET AL: "SynCode: LLM Generation with Grammar Augmentation", ARXIV.ORG, CORNELL UNIVERSITY LIBRARY, 201 OLIN LIBRARY CORNELL UNIVERSITY ITHACA, NY 14853, 14 July 2024 (2024-07-14), XP091817836

## Description

### Field of the invention

The invention relates to a method of using language models, e.g. large language models (LLM), for scalable and error-free code generation for create, read, update, and delete (CRUD) applications with role-based access control.

### Description of the related art

Large language models (LLM) excel in numerous tasks, including question answering and generating code. Essentially, these models can continue a given sequence of tokens in a way that aligns with statistical probabilities. Users engage these models by providing instructions or examples in natural language, enabling them to execute a broad spectrum of tasks, e.g. computer code generation. Through sophisticated prompting techniques, interactions can be facilitated between the language model, the user, and external resources such as other networked services.

Yet, achieving reliable results or tailoring these models for particular applications still is a challenge because of the probabilistic nature of LLMs and in particular hallucination. Hallucination and the probabilistic LLM output leads to generally faulty code, which makes the approach of using an LLM to convert instructions in natural language by users, unreliable for professional IT-systems with safety-relevant applications, such as database schema manipulation. Hence, IT-experts are needed to monitor database schema manipulations and to intervene if necessary.

A known solution to address code errors and hallucination is re-prompting. Although this approach reduces the number of code errors, it does not resolve the problem completely. Moreover, this approach still requires IT-experts having programming knowledge and it increases the LLM inference costs and leads to frustration in user experience .

Another known solution is fine-tuning the LLM. This approach further reduces the number of code errors, however it still does not eliminate all code errors. Moreover, this approach adds the problem of forgetting, since fine-tuning a model relies on the model memory. This has the negative effect that the error rate increases in long on-running sentences and it's not scalable for large code repositories which is frequent in enterprise settings.

Yet another known solution is using advanced models like GPT-4o. Such advanced models have a low output error rate. However, this is the most expensive one of the described solutions. Moreover, the code of the model is not available to the public such that the functionality of the model is not comprehensible. Further, there are privacy concerns for enterprises about sending over their critical data.

Moreover, even in such advanced models, outputs might be unusable, if prompting errors occur. To mitigate this, integrating "escape hatches" is recommended. LLMs strive for accurate answers. If provided with texts for structured data extraction and one text is missing, identifying the correct response becomes problematic, resulting in inaccuracies. A practical solution is to use an escape mechanism, like a "textlsMissing" boolean, to address these situations.

### Summary of the invention

The problem to be solved by the present disclosure is to reduce the above disadvantages of current methods in using LLMs for code generation. Solutions of the problem are described in the independent claims. The dependent claims relate to further improvements of the solutions.

The present disclosure allows for guiding language models for generating reliable code, for example in order to develop CRUD applications for enterprise IT applications using natural language. The generated code from a language model is referred to as reliable, if it complies with the grammar rules of a given programming language, such as a database language.

The general idea behind the present disclosure is to provide a vector database table to represent context-free language and/or corresponding context-free grammar. During decoding phase of the code generation, the language model reads and uses grammar and language structure from the vector database table to distinguish between valid and invalid sequences of tokens, based on compatibility with the rules of the context-free grammar.

However even using this method still leaves some room for hallucination in the output, but since it guarantees that the generated code is always compliable and does not break the target system functionality, it achieves its main objective of code reliability, thus minimizing the cost of scaling LLM code generation in large enterprise and on-premise settings.

In a first aspect, the present disclosure relates to a vector database table comprising information depending on a given language model and a given context-free language and/or corresponding context-free grammar. The language model has a token space, from which the language model may choose tokens during decoding. The context-free language and its corresponding context-free grammar comprise production rules that describe all possible strings in the context-free language.

The vector database table may comprise a look-up table and/or a first list and/or a second list. Here, the term look-up table means a mapping which assigns certain information to sequences of tokens from a subset of the set of all sequences of tokens from the token space. Hence, a look-up table can be used to read out certain information regarding a specific sequence of tokens. Different sequences of tokens may have different information assigned to them. Further, the term list means a subset of the set of all sequences of tokens from the token space. All sequences of tokens on the list have some properties in common, according to the definition of the list. Hence, if a sequence of tokens occurs on the list, this means that the sequence of tokens has certain properties according to the definition of the list.

The look-up table may comprise at least one sequence of tokens from the token space together with at least a tag assigned to the respective sequence of tokens. The tag may identify the respective sequence as accepted, if that sequence complies with the rules of the context-free grammar, and otherwise may identify the respective sequence as rejected, if that sequence violates the rules of the context-free grammar. For example, the tag can be a truth value which is one, if the respective sequence complies with the rules of the context-free grammar, and which is zero, if the respective sequence violates the rules of the context-free grammar. Additionally and/or alternatively, the tag may be any type of information, which can be assigned to the at least one sequence of tokens and which identifies the at least one sequence of tokens as having one of two states, namely either accepted or rejected. Hence, for each sequence of tokens in the look-up table, the look-up table provides the information whether that sequence of tokens is usable as a part of a reliable output in the above sense, i.e. an output which complies with the rules of the context-free grammar.

The first list may comprise at least one sequence of tokens from the token space, wherein each sequence on the first list complies with the rules of the context-free grammar. Hence, when a sequence of tokens occurs on the first list, this implies the information that this sequence of tokens is usable as a part of a reliable output in the above sense, i.e. an output which complies with the rules of the context-free grammar.

The second list may comprise at least one sequence of tokens from the token space, wherein each sequence on the second list violates the rules of the context-free grammar. Hence, when a sequence of tokens occurs on the second list, this implies the information that this sequence of tokens is not usable as a part of a reliable output in the above sense.

Alongside the look-up table, an optional pushdown automaton (PDA) acceptor may run any given entry from the vector database table to produce the next valid token based on the grammar rules of the context-free language. This check can be done either when a first list, or second list exists or doesn't exist but, in all cases, these acceptors populate the initial first lists and second lists in the database. The PDA acceptor may be used independently from a stored first list or second list.

As mentioned above, a key idea of the present disclosure is that during decoding, the language model reads and uses information from the vector database table. This information allows the language model to determine whether a specific sequence of tokens complies with the rules of the context-free grammar or not. A simple example would be that the vector database table comprises the look-up table with all possible sequences of tokens from the token space together with their corresponding tags, the first list with all possible sequences of tokens from the token space which comply with the rules of the context-free grammar, and the second list with all possible sequences of tokens from the token space which do not comply with the rules of the context-free grammar. However, such a vector database table would require a lot of memory space and it might take a lot of time to search the look-up table, the first list, and the second list.

In order to reduce the size of the vector database table and the time required for searching it, it is preferred that the look-up table and the lists do not comprise all possible sequences of tokens from the token space, but only a subset of the sequences of tokens from the token space. Such a subset can be smaller but may still be sufficient for making sure that certain output sequences comply with the rules of the context-free grammar. Such a subset will be referred to as a representative subset. This concept is formally defined in the following.

Let R be an input request for an answer, for which there is a probability p with 0<p≤1 that the language model will find an answer A₁ (being source code), which complies with the rules of the context-free grammar. Moreover, let RS be a subset of the set of all sequences of tokens from the token space.

If at least one of the look-up table comprising RS and the corresponding tags, the first list comprising RS, and the second list comprising RS provides enough information, such that based on this information, the language model can find an answer A₂ to the input request R and prove that A₂ complies with the rules of the context-free grammar, wherein A₂ and A₁ have the same effect (when executed as source code), then RS is defined to be a representative subset in combination with the at least one of the look-up table, the first list, and the second list or an output from the PDA acceptor. In this case, at least one of the look-up table, the first list, and the second list or the PDA acceptor is referred to as representative.

If RS₁, RS₂, and RS₃ are subsets of the set of all sequences of tokens from the token space, and the look-up table comprising RS₁ and the corresponding tags, the first list comprising RS₂, and the second list comprising RS₃ together provide enough information, such that based on the information, the language model can find an answer A₃ to the input request R and prove that A₃ complies with the rules of the context-free grammar, wherein A₃ and A₁ have the same effect (when executed as source code), then RS₁, RS₂, and RS₃ are defined to be representative subsets in combination with the look-up table, the first list, and the second list. In this case, the look-up table, the first list, and the second list and the PDA acceptor are referred to as representative in combination.

Preferably, at least one of the look-up table, the first list, the second list, the PDA acceptor and the vector-database table is representative and/or all four of them are representative in combination.

For example, if the token space of the language model is a finite set and the maximum length of possible outputs of the language model is limited, the set of all sequences of tokens from the token space, which do not exceed the maximum length of possible outputs of the language model, is a finite representative subset of the set of all sequences of tokens from the token space in the above sense.

For example, the vector database table may comprise a look-up table with a (preferably representative) subset of the set of all sequences of tokens from the token space together with their tags. Further, the first and second lists may comprise subsets of the set of all sequences of tokens from the token space, which are smaller than the (preferably representative) subset, but which comprise sequences of tokens which occur more frequently than a majority of sequences of tokens from the (preferably representative) subset. Therefore, an efficient search strategy can be implemented by firstly checking whether a specific sequence of tokens is on the first list or the second list, and only if this is not the case, looking up the sequence of tokens in the look-up table.

In addition or alternatively to sequences of tokens, the look-up table and/or the first list and/or the second list may comprise corresponding sequence identifiers. This may reduce the storage space required to store the vector database table.

Moreover, the vector database table may comprise data structures which are additional and/or alternative to the above-described look-up table and/or first list and/or second list. For example, the look-up table may have more than two dimensions.

The advantage of the vector database table as a data structure is that the search complexity is of O(c), where c is a constant natural number. In the following, an example of how such a vector database table can be generated is given.

In a second aspect, the present disclosure also relates to a method for generating a vector database table for validating a sequence of tokens generated by an artificial intelligence based on a given language model having a token space.

In a first step of the method, a context-free language may be defined. This can mean creating a new context-free language or using an existing one, like a programming language. A context-free language has a corresponding grammar that generates it. Therefore, a context-free language can be defined by its specific grammar, which includes production rules describing all possible strings in that language.

Thereby, a context-free grammar is a 4-tuple (V, Σ, R, S), wherein V is a finite set of variables, Σ is a finite set of terminals disjoint from V, R is a finite set of rules, each of which rules being a variable and a string of variables and terminals, and S ∈ V is the start variable.

The context-free language can be generated from the context-free grammar by generating each string of that language by the following steps: Saving a start variable. Finding a variable that is saved and a rule that starts with that variable. Replacing the found variable according to that rule. Repeating the steps of finding a variable that is saved and a rule that starts with that variable, and replacing the variable according to that rule until no variable is left.

In a second step of the method, the context-free grammar may be converted into a pushdown automaton that is configured to recognize the context-free language.

Thereby, a pushdown automaton comprises a 6-tuple (Q, Σ, Γ, δ, q₀, F), wherein Q is the finite set of states, Σ is the finite input alphabet, Γ is the finite stack alphabet, P(Q × Γ_{ε}) denotes the set of all sets of members of Q × Γ_{ε}, where Γ_{ε} = Γ U {ε} and Σ_{ε} = Σ U {ε} with ε being the empty string, δ: Q × Σ_{ε} × Γ_{ε} → P(Q × Γ_{ε}) is the transition function, q₀ ∈ Q is the start state, and F ⊆ Q is the finite set of accept states.

The context-free grammar may be converted into a pushdown automaton as follows: The pushdown automaton, into which the context-free grammar is converted, is designed to accept an input, if the context-free grammar generates that input. To decide whether the context-free grammar generates the input, the pushdown automaton starts with the start variable S of the context-free grammar and determines, whether there is some series of substitutions according to the rules of the context-free grammar which turns the start variable S into the input.

More specifically, a marker symbol M and the start variable S may be placed on the stack of the pushdown automaton. Then, the following step may be iterated: If the top of the stack is a variable symbol A, the pushdown automaton nondeterministically selects one of the rules for A and substitutes A according to this rule. In this respect, "nondeterministically" means that not only one specific rule is selected, but a plurality of different rules can be applied in order to find out, which alternative is most adequate, i.e. nondeterminism leads to several branches each corresponding to an alternative. If the top of the stack is a terminal symbol a, the pushdown automaton may read the next symbol from the input. If the next symbol from the input is the terminal symbol a, the step is repeated. Else, the pushdown automaton rejects this branch of the nondeterminism. If the top of the stack is the marker symbol M, the pushdown automaton accepts the input and outputs the result that the input is accepted.

In a third step of the method, the generated pushdown automaton may be used for mapping a set of sequences of tokens from the token space to a set of automaton states of the pushdown automaton. Specifically, a sequence of tokens may be assigned a first tag, which identifies that sequence as accepted, if that sequence appears in the automaton states of the pushdown automaton and/or is accepted by the pushdown automaton, and otherwise the sequence may be assigned a second tag, which identifies that sequence as rejected, if that sequence does not appear in the automaton states of the pushdown automaton and/or is rejected by the pushdown automaton.

Additionally and/or alternatively, in the third step of the method, the tokens may be embedded to acceptors and/or a distributed hash table may be used and/or a B-tree map may be used.

In a fourth step of the method, the results of the third step may be saved to a memory in the form of a vector database table. The vector database table may have the same properties as the vector database table described above for the first aspect of the present disclosure.

In a third aspect, the present disclosure also relates to a method for guiding a given language model having a search space of tokens to generate outputs which comply with the rules of a given context-free grammar corresponding to a given context-free language.

The method according to the third aspect may comprise a first step of receiving a request for an answer where the answer may be a sequence of tokens.

Moreover, the method according to the third aspect may comprise a second step of generating a new sequence of tokens based on the request, thereby taking into account information from the vector database table for the given language model and the given context-free language according to the first and/or second aspect, in order to guarantee that the new sequence of tokens complies with the rules of the context-free grammar.

For example, a sequence of tokens may be generated based on the request. To improve clarity, we refer to the generated sequence of tokens as an intermediate sequence of tokens. Information regarding the intermediate sequence of tokens may be read from the look-up table, the first list, the second list, or another data structure of the vector database table. Based on this information, it may be determined whether the intermediate sequence of tokens complies with the rules of the context-free grammar. For example, if the intermediate sequence of tokens is on the second list and/or has a tag that identifies the intermediate sequence as rejected, the intermediate sequence of tokens may be discarded and a new intermediate sequence may be generated. If the intermediate sequence of tokens is on the first list and/or has a tag that identifies the intermediate sequence as accepted, the intermediate sequence of tokens is defined to be the new sequence.

Additionally and/or alternatively, in order to determine whether an intermediate sequence of tokens complies with the rules of the context-free grammar, the information from the vector database table may be used in a way that is different from the way described in the preceding paragraph. For example, the intermediate sequence of tokens is not necessarily comprised in the look-up table or in one of the lists. It is only necessary that the vector database table comprises information which allows for determining whether the intermediate sequence of tokens complies with the rules of the context-free grammar. For example, the intermediate sequence may be represented by an identifier, which may be one or more sub-sequences of the intermediate sequence of tokens. Thereby, more than one sequence of tokens may be represented by the same identifier.

Preferably, the language model may generate sequences of tokens iteratively based on the request. Thereby, initially, the request may be translated into an initial sequence of tokens and in each iteration step, the next token of the current sequence may be predicted and added to the current sequence, such that the length of the sequence is increased. If in an iteration step a special end-of-sequence-token is predicted or another stopping criterion is met, the iteration may be stopped and the current sequence may be used as the output.

Alternatively and/or additionally to the above described ways of taking into account information from the vector database table in order to guarantee that the new sequence of tokens complies with the rules of the context-free grammar, two preferred ways of doing so may be used, if sequences are generated iteratively as described in the preceding paragraph.

Preferably, in each iteration step, it is checked via the vector database table whether the current sequence of tokens complies with the rules of the context-free grammar. If it is determined that the current sequence of tokens does not comply with the rules of the context-free grammar, the token added to the current sequence of tokens in the latest iteration step may be removed from the current sequence of tokens before the next iteration step may be performed. Thereby, in the next iteration step, the language model is not allowed to predict the removed token again. This can be done by removing this token from the token space for the next iteration step.

Additionally and/or alternatively, more than one iteration step may be executed before determining whether the current sequence of tokens complies with the rules of the context-free grammar. If it does not, the tokens added in the more than one iteration steps are removed.

Particularly preferably, in each iteration step, the token space for predicting the next token of the current sequence of tokens may be pruned prior to predicting the next token. Thereby, the pruning of the token space comprises ruling out tokens from the token space, such that only legal tokens remain in the pruned token space. Here, a token is referred to as a legal token, if adding that token to the current sequence of tokens results in a sequence of tokens which complies with the rules of the context-free grammar. After pruning the token space, the prediction of the next token may be performed over the pruned token space through overriding the language model sampling strategy from the model logit outputs.

Additionally and/or alternatively, the token space for predicting the next two or more tokens of the current sequence of tokens may be pruned prior to predicting the next two or more tokens by ruling out tokens from the token space, such that only legal tokens remain in the pruned token space for the prediction of the next two or more tokens.

Moreover, the method according to the third aspect may comprise a third step of outputting the new sequence of tokens.

Preferably, the language model output may be based on transformer architecture and/or on the next prediction provided through token probability distribution.

Preferably, when the next token is predicted, not only the most relevant result is used, but a plurality of relevant results may be used to increase output creativity.

Preferably, whenever it is checked via the vector database table whether a sequence of tokens complies with the rules of the context-free grammar, the sequence of tokens and the result of the checking may be fed back to the language model. For example, the result may be a tag corresponding to said sequence of tokens according to the vector database table.

In any of the above-described aspects, the context-free language and the corresponding context-free grammar may represent a programming language and/or a database language. Hence, the output of the language model in the method according to the third aspect may be source code in the programming language and/or the database language. An example for a context-free programming and database language is SQL.

For example, the output of the language model is source code in the programming language and/or the database language, which may be configured for manipulating a database schema, and/or performing create, read, update, and delete (CRUD) applications, and/or manipulating data in a role-based access management system, and/or generating user-interfaces integrated with CRUD applications and role-based access management.

Additionally and/or alternatively, the output may be configured for inter-process communication, and/or inter-machine communication, and/or generating and consuming communication protocols.

In any of the above aspects, the context-free grammar may be created by using API descriptions for further developing those APIs and/or the context-free grammar may be converted into a pushdown automaton that is configured to recognize the context-free language corresponding to the context-free grammar.

Moreover, new APIs may be generated based on the input to the language model and existing acceptors describing another service.

Furthermore, regular expressions may be used instead of context-free grammars.

### Description of Drawings

In the following the invention will be described by way of example, without limitation of the general inventive concept, on examples of embodiments with reference to the drawings.
- **Fig. 1**: shows a schematic representation of a vector database table and the PDA acceptor.
- **Fig. 2**: is a flow chart of a method for creating a vector database table according to Fig. 1.
- **Fig. 3**: is a flow chart of a method for guiding a language model to generate reliable output.
- **Fig. 4**: shows a schematic representation of masking an LLM token space.

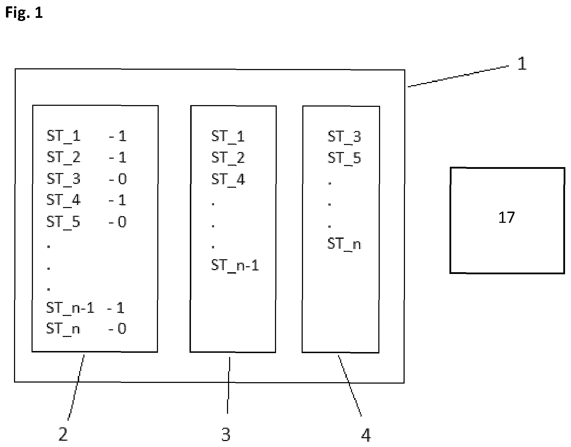

Fig. 1 shows a schematic representation of an example of a vector database table 1 according to the present disclosure. The vector database table 1 may comprise information depending on a given language model 5, a given context-free language and/or a context-free grammar corresponding to the context-free language. The language model 5 may have a finite token space 6, from which the language model 5 may choose tokens t during decoding. The output of the language model 5 is a sequence ST of tokens t from the token space 6, wherein the maximum length of possible outputs of the language model 5 may be limited, i.e. preferably, there is a natural number m such that the length k of any sequence of tokens ST is smaller than or equal to m. As a consequence, the set of all possible output sequences is finite, i.e. it has a natural number of n elements STᵢ, where 1 ≤ *i* ≤ n.

Like in the example shown in Fig. 1, the vector database table 1 may comprise a look-up table 2. The look-up table 2 may comprise all possible output sequences of the language model 5, i.e. all elements of the set ST* with $ST * : = \left\{{ST}_{i}\left|\begin{matrix}{ST}_{i} = \left({t}_{1},…,{t}_{{k}_{i}}\right) ; {t}_{j} ∈ T ; ∀ i , j , {k}_{i} ∈ ℕ \\ with 1 \leq i \leq n , 1 \leq j \leq {k}_{i} , {k}_{i} \leq m ; m , n ∈ ℕ\end{matrix}\right.\right\}$ together with a tag assigned to each sequence in ST*, where T denotes the token space 6 or a subset thereof. In the example shown in Fig. 1, the left column of the look-up table 2 comprises sequences of tokens ST₁, ST₂, ..., STₙ. The right column of the look-up table 2 comprises for each STᵢ with 1 ≤ *i* ≤ n a tag. In the example shown, there are two tags, namely the truth values 0 and 1. Hereby, a truth value of 1 means that the respective sequence of tokens is usable as a part of a reliable output, and a truth value of 0 means that the respective sequence of tokens is not usable as a part of a reliable output. As set forth above, an output of a language model 5 is referred to as reliable, if it complies with the grammar rules of a given programming language.

The look-up table 2 can be interpreted as a mapping ST* → {0, 1} of the set of sequences *ST** to the set of truth values {0, 1}. Therefore, the look-up table 2 comprises for each sequence ST in ST^{*} the information whether this sequence is usable as a part of a reliable output.

In the example shown in Fig. 1, the vector database table 1 also comprises a first list 3 and a second list 4, wherein the first list 3 comprises all sequences ST in ST^{*}, which are usable as a part of a reliable output, i.e. it comprises the sequences ST from the look-up table 2, which have the truth value 1 assigned to them. As can be seen from look-up table 2, the sequences ST₁, ST₂, ST₄, ..., STₙ₋₁ have the truth value 1 assigned to them and therefore occur on the first list 3. The sequences ST₃, ST₅, ..., STₙ have the truth value 0 assigned to them and therefore occur on the second list 4.

Like in this example, each of the look-up table 2, the first list 3, and the second list 4 may comprise a representative subset of sequences from ST^{*}, which means that each one of the look-up table 2, the first list 3, and the second list 4 comprises all information which are necessary for determining for any sequence ST in ST^{*} whether this sequence is usable as a part of a reliable output.

Like in the example shown in Fig. 1, there may be an optional PDA acceptor 17. The PDA acceptor 17 may comprise a 6-tuple (Q, Σ, Γ, δ, q₀, F), wherein Q is the finite set of states, Σ is the finite input alphabet, Γ is the finite stack alphabet, P(Q × Γ_{ε}) denotes the set of all sets of members of Q × Γ_{ε}, where Γ_{ε} = Γ U {ε} and Σ_{ε} = Σ U {ε} with ε being the empty string, δ: Q × Σ_{ε} × Γ_{ε} → P(Q × Γ_{ε}) is the transition function, q₀ ∈ Q is the start state, and F ⊆ Q is the finite set of accept states. Preferably, each entry ST from the lookup table 2 is a subset of states Q (ST ⊆ Q) thus each ST can be algorithmically processed to get all the valid next tokens based on the represented grammar in the lookup table 2 which also represent the context-free language.

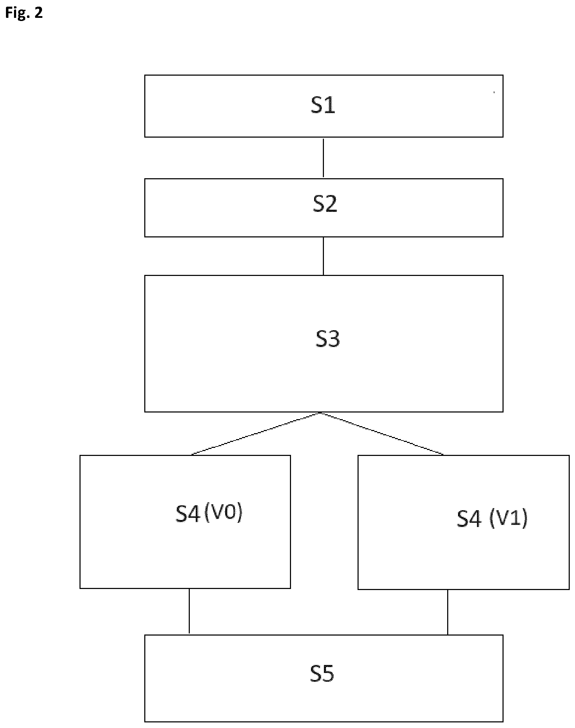

Fig. 2 is a flow chart describing a method for generating a vector database table 1 according to the present disclosure, specifically a vector database table 1 according to the example shown in Fig. 1. In step S1, the method starts with a given context-free grammar and a given language model 5. The context-free grammar has rules and the language model 5 has a token space 6. Based on the given context-free grammar and the given language model 5, a vector database table 1 will be created which for each possible output sequence of tokens of the language model 5 provides the information, whether this sequence of tokens complies with the rules of the context-free grammar.

In step S2, the context-free grammar is converted into a pushdown automaton. The pushdown automaton, into which the context-free grammar is converted, may be designed such that it accepts an input sequence of tokens, if and only if the context-free grammar generates that input. Hence, the pushdown automaton may be a representation of the context-free grammar which allows for determining for each possible output sequence of tokens of the language model 5, whether this sequence of tokens complies with the rules of the context-free grammar.

In optional step S3, each possible output sequence of tokens of the language model 5 is fed to the pushdown automaton. In response to each sequence fed to the pushdown automaton, the pushdown automaton provides the information whether this sequence is accepted or rejected. The result of the pushdown automaton may then be added to a data structure in step 4. Like in the example shown in Fig. 2, the data structure may be the vector database table 1 shown in Fig. 1, which comprises a look-up table 2, a first list 3, and a second list 4. If a sequence is accepted by the pushdown automaton, the sequence and/or a corresponding sequence identifier may be added to the look-up table 2 together with the truth value 1 and to the first list 3. Otherwise, if the sequence is rejected by the pushdown-automaton, the sequence and/or the corresponding sequence identifier may be added to the look-up table 2 together with the truth value 0 and to the second list 4.

When all possible output sequences of tokens are processed by the pushdown automaton and all respective results are added to the respective table and lists, the look-up table 2, the first list 3, and the second list 4 may be saved in step S5 to a memory in the form of a vector database table 1.

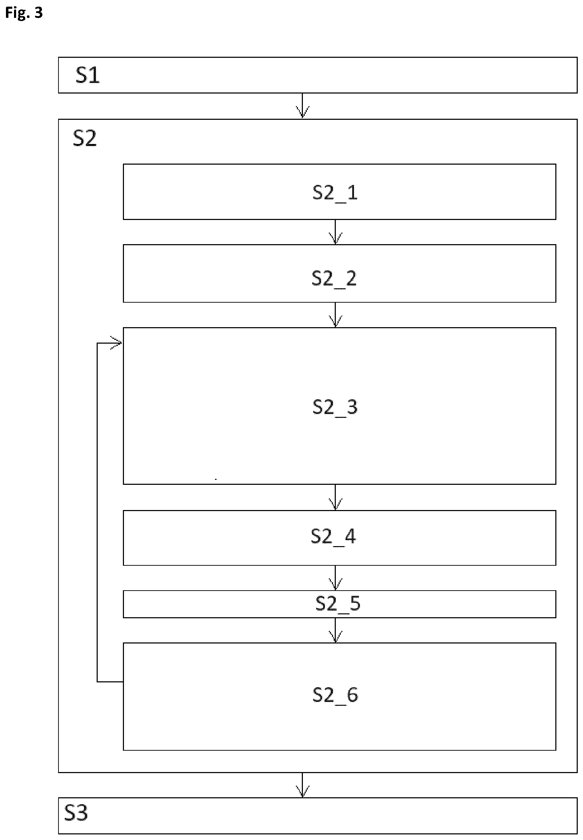

Fig. 3 is a flow chart of a method for guiding a language model 5 to generate reliable output. In step S1, the language model 5 may receive a request for an answer, the request being in natural language. In step S2, the language model 5 may generate a new sequence of tokens based on the request it has received.

Like in the example shown in Fig. 3, the new sequence of tokens may be generated iteratively. In the beginning, the language model 5 may translate the input request to an initial sequence of tokens (step S2_1). It may then define a current sequence of tokens, which in the beginning may be identical to the initial sequence of tokens (step S2_2). In each iteration step, the next token of the current sequence of tokens may be predicted. Thereby, the token space 6, which is abbreviated by the sign T, of the language model 5 may be pruned based on the vector database table 1 (step S2_3). This means that some tokens from the token space 6 of the language model 5 may be ruled out, preferably by lowering their probability in the sampling or decoding phase of generation, such that only legal tokens remain in the pruned token space 16, which is abbreviated by the sign Tₚ. Thereby, a token is referred to as a legal token, if adding that token to the current sequence of tokens results in a sequence which has the truth value 1 according to the vector database table 1 from Fig. 1. Hence, information read from the vector database table 1 may be used to generate the pruned token space 16 of legal tokens.

The language model 5 may then predict the next token of the current sequence of tokens by choosing from the pruned token space 16 the token, which most likely is the next token of the current sequence (step S2_4). This token may then be added to the current sequence, such that the length of the current sequence is increased (step S2_5). Since the language model 5 can only choose tokens from the restricted pruned token space 16, the language model 5 is biased. Moreover, since the pruned token space 16 only comprises legal tokens, the language model 5 is biased to produce reliable output.

If the predicted next token is a special end-of-sequence-token or another stopping criterion is met, the iteration may be stopped and the new sequence may be defined to be the current sequence. Else, the language model 5 may continue with the next iteration step (step S2_6).

When the iteration is stopped, like in step S3 the new sequence of tokens may be output as the answer of the language model 5 to the request received in step S1.

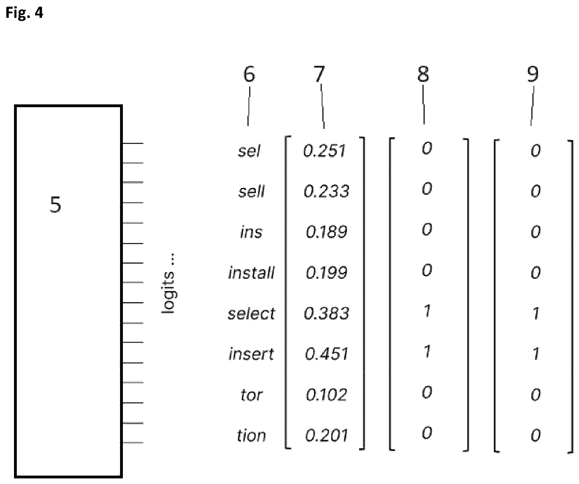

Fig. 4 shows a simplified schematic of how the pruning of the token space 6 of a (large) language model 5 can be implemented. Like in the example, the language model 5 may have a token space 6, which is a set of tokens such as "sel", "sell", ..., "tion". During its creation, the language model 5 was trained to determine which tokens from the token space 6 are most likely to occur in combination with each other. To that end, a large number of texts was provided to the language model 5, and the language model 5 derived probability distributions 7 for the occurrence of certain tokens in certain contexts, based on the large number of texts.

During decoding or sampling, the language model 5 may determine which of the tokens in the token space 6 has the highest probability of being the next token in a given sequence of tokens. Like in the example shown in Fig. 4, there is a probability distribution 7 which assigns a probability value to each token of the token space 6. Based on the probability distribution 7, the language model 5 can determine which token has the highest probability of being the next token.

In the method according to the present disclosure, the token space 6 may be pruned before the language model 5 may determine which token has the highest probability of being the next token. This can be done by using a mask 8. Like in the example shown in Fig. 4, the mask 8 may assign to each token from the token space 6 one of two values, namely 1 or 0. The tokens which have the value 0 may be masked out, such that the pruned token space 16 may only comprise those tokens which have the value 1. The language model 5 may then search for the token which has the highest probability of being the next token, while only taking into account the tokens in the pruned token space 16.

The values assigned to the tokens in the token space 6 by the mask 8 may correspond to the truth values assigned to the tokens in the token space 6 by the look-up table 2. As a consequence, the pruned token space 16 may be identical to the subset of legal tokens of the token space 6. Therefore, the present method may guarantee that the output complies with the rules of the context-free grammar. Moreover, using a vector database table 1 as described above reduces the computation time necessary for the search process at the expense of memory space occupied by the vector database table 1. Memory usage may increase to store the vector database with a capped lookup time in-memory, such that in each iteration of token generation only the processing cost of look-up table 2 and PDA acceptor will be paid, which is capped. This also guarantees that in each generation, no increasing cost of processing previous tokens for staying aligned with grammar rules will be required. This makes the method scalable to output large number of tokens with a capped cost per token.

Like in the example shown in Fig. 4, an optional second mask 9 may be used, which allows for randomizing the output for sampling. Specifically, such a second mask 9 may determine the number of tokens predicted by the language model 5 in each iteration step. In addition to the token with the highest probability of being the next token of a sequence, the language model 5 can output for example the tokens with the second and third highest probabilities. Like in the example shown in Fig. 4, the tokens with the highest and the second highest probabilities may be further processed.

### List of reference numerals

- 1: Vector database table
- 2: Look-up table
- 3: First list
- 4: Second list
- 5: Language model / large language model (LLM)
- 6: Token space of the (large) language model
- 7: Probability distribution
- 8: Mask for pruning
- 9: Mask for randomized output for sampling
- 16: Pruned token space
- 17: PDA acceptor

## Claims

1. Method for generating and using a vector database table (1) for validating a sequence of tokens generated by an artificial intelligence based on a given language model (5) having a token space (6) and a given maximum finite length of the sequence of output tokens, the method comprising:
- defining a context-free language with a corresponding context-free grammar;
- converting the context-free grammar into a pushdown automaton that is configured to recognize the context-free language;
- using the pushdown automaton for mapping a sequence of tokens from the token space (6) to a set of automaton states of the pushdown automaton, wherein the length of each of the sequences is smaller or equal to the maximum finite length and wherein a sequence of tokens is assigned a first tag, which identifies that sequence as accepted, if that sequence appears in the automaton states of the pushdown automaton and/or is accepted by the pushdown automaton, and otherwise the sequence is assigned a second tag, which identifies that sequence as rejected, if that sequence does not appear in the automaton states of the pushdown automaton and/or is rejected by the pushdown automaton;
- saving
• a list comprising all sequences of tokens from the token space and/or corresponding sequence identifiers together with at least the tag assigned to the respective sequence, and/or
• a first list (3) comprising the sequences from all sequences of tokens from the token space and/or corresponding sequence identifiers, wherein for each sequence and/or sequence identifier on the first list (3), the respective sequence has a first tag, and/or
• a second list (4) comprising the sequences from all sequences of tokens from the token space and/or corresponding sequence identifiers, wherein for each sequence and/or sequence identifier on the second list (4), the respective sequence has a second tag,
in the form of a vector database table (1) to be stored in-memory;
- guiding the language model (5) to generate outputs which comply with the rules of the context-free grammar corresponding to the given context-free language by:
(4.1) receiving a request for an answer where the answer is a sequence of tokens;
(4.2) generating a new sequence of tokens based on the request while taking into account information from the saved vector database table (1) in order to guarantee that the new sequence of tokens complies with the rules of the context-free grammar;
(4.3) outputting the new sequence of tokens.

2. A vector database table (1), which is obtained by the method according to claim 1 for a given language model (5) having a token space (6) and a given context-free language with a corresponding context-free grammar, the vector database table (1) comprising:
- at least one mapping from a sequence of tokens from the token space (6) and/or at least one corresponding sequence identifier together with at least a tag assigned to the respective sequence, wherein the tag identifies the respective sequence as accepted, if that sequence complies with the rules of the context-free grammar, and otherwise identifies the respective sequence as rejected, if that sequence violates the rules of the context-free grammar, and/or
- a first list (3) comprising at least one sequence of tokens from the token space (6) and/or at least one corresponding sequence identifier, wherein each sequence and/or sequence identifier on the first list (3) complies with the rules of the context-free grammar, and/or
- a second list (4) comprising at least one sequence of tokens from the token space (6) and/or at least one corresponding sequence identifier, wherein each sequence and/or sequence identifier on the second list (4) violates the rules of the context-free grammar.

3. Method according to claim 1, wherein the generating step 4.2 comprises the steps of:
(5.1) generating an intermediate sequence of tokens based on the request;
(5.2) checking via the vector database table (1) whether the intermediate sequence of tokens has a first or a second tag or is comprised in the first (3) or second list (4);
(5.3) if the intermediate sequence of tokens has a first tag or is comprised in the first list (3), defining the intermediate sequence of tokens to be the new sequence of tokens, else if the intermediate sequence of tokens has a second tag or is comprised in the second list (4), rejecting the intermediate sequence and repeating steps 5.1 to 5.3 to generate and check another intermediate sequence.

4. Method according to claim 1 or 3,
wherein sequences of tokens are generated iteratively based on the request,
wherein initially, the request is translated into an initial sequence of tokens and in each iteration step, the next token of the current sequence is predicted and added to the current sequence, such that the length of the sequence is increased,
wherein if in an iteration step a special end-of-sequence-token is predicted or another stopping criterion is met, the iteration is stopped and the current sequence is output.

5. Method according to claim 4,
wherein in each iteration step, it is checked via the vector database table (1) whether the current sequence of tokens has a first or a second tag or is comprised in the first list (3) or second list (4);
wherein if the current sequence of tokens has a second tag or is comprised in the second list (4), the token added to the current sequence of tokens in the latest iteration step is removed from the current sequence of tokens before the next iteration step is performed.

6. Method according to claim 4 or 5,
wherein in each iteration step, it is checked via a PDA acceptor (17) that a given entry from the vector database table (1) is a first or a second tag or is comprised in the first list (3) or second list (4) without the need to have the tag stored in the vector database table (1);
wherein if the current sequence of tokens has a second tag or is comprised in the second list (4), the token added to the current sequence of tokens in the latest iteration step is removed from the current sequence of tokens before the next iteration step is performed.

7. Method according to claim 4 or 5,
wherein in each iteration step, the token space (6) for predicting the next token of the current sequence of tokens is pruned prior to predicting the next token;
wherein the pruning of the token space (6) comprises ruling out tokens from the token space (6), such that only legal tokens remain in the pruned token space (16);
wherein a token is a legal token, if adding that token to the current sequence of tokens results in a sequence of tokens which has a first tag or is comprised in the first list (3) of the vector database table (1);
wherein after pruning the token space (6), the prediction of the next token is performed over the pruned token space (16) through overriding the language model (5) sampling strategy from the model logit outputs.

8. Method according to one of claims 3 to 7, wherein when it is checked via the vector database table (1) whether a sequence of tokens has a first or a second tag or is comprised in the first (3) or second list (4), that sequence together with its assigned tag is fed back to the language model (5).

9. The method of any of claims 1 and 3 to 8 or the vector database table of claim 2, wherein the context-free language and the corresponding context-free grammar represent a database language.

10. Method according to claim 9 and one of claims 1 and 3 to 8, wherein the output of the language model (5) is source code in the database language which allows for and/or is configured for
- manipulating a database schema, and/or
- performing create, read, update, and delete, CRUD, applications, and/or
- manipulating data in a role-based access management system, and/or
- generating user-interfaces integrated with CRUD applications and role-based access management.

11. The method of any of claims 1 and 3 to 10 of the vector database table of claim 2, wherein the context-free language and the corresponding context-free grammar represent a programming language.

12. Method according to claim 11 and one of claims 1 and 3 to 10, wherein the output of the language model (5) is source code in the programming language which allows for and/or is configured for
- inter-process communication, and/or
- inter-machine communication, and/or
- generating and consuming communication protocols.

13. Method according to any of the preceding method claims, further comprising the steps of
- creating the context-free grammar by using API descriptions for further developing those APIs and/or
- converting the context-free grammar into a pushdown automaton that is configured to recognize the context-free language corresponding to the context-free grammar.

14. Method according to claim 13, further comprising the step of generating new APIs based on the input to the language model (5) and existing acceptors describing another service.

## Patentansprüche

1. Verfahren zum Erzeugen und Verwenden einer Vektordatenbanktabelle (1) zur Validierung einer von einer künstlichen Intelligenz basierend auf einem gegebenen Sprachmodell (5) erzeugten Tokensequenz mit einem Tokenraum (6) und einer gegebenen maximalen endlichen Länge der Sequenz ausgegebener Tokens, wobei das Verfahren Folgendes aufweist:
- Definieren einer kontextfreien Sprache mit einer entsprechenden kontextfreien Grammatik;
- Umwandeln der kontextfreien Grammatik in einen Kellerautomaten, der konfiguriert ist, um die kontextfreie Sprache zu erkennen;
- Verwenden des Kellerautomaten zum Abbilden einer Tokensequenz aus dem Tokenraum (6) auf einen Satz von Automatenzuständen des Kellerautomaten, wobei die Länge von jeder der Sequenzen kleiner oder gleich ist zur maximalen endlichen Länge und wobei einer Tokensequenz ein erstes Tag zugewiesen wird, das diese Sequenz als akzeptiert kennzeichnet, wenn diese Sequenz in den Automatenzuständen des Kellerautomaten erscheint und/oder vom Kellerautomaten akzeptiert wird, und andernfalls der Sequenz ein zweites Tag zugewiesen wird, das diese Sequenz als abgelehnt kennzeichnet, wenn diese Sequenz nicht in den Automatenzuständen des Kellerautomaten erscheint und/oder vom Kellerautomaten abgelehnt wird;
- Speichern
• einer Liste aufweisend alle Tokensequenzen aus dem Tokenraum und/oder entsprechende Sequenzenkennungen zusammen mit mindestens dem Tag, welches der entsprechenden Sequenz zugeordnet ist, und/oder
• einer ersten Liste (3), aufweisend die Sequenzen aus allen Tokensequenzen aus dem Tokenraum und/oder entsprechende Sequenzkennungen, wobei für jede Sequenz und/oder Sequenzkennung auf der ersten Liste (3) die jeweilige Sequenz ein erstes Tag hat, und/oder
• einer zweiten Liste (4), aufweisend die Sequenzen aus allen Tokensequenzen aus dem Tokenraum und/oder entsprechende Sequenzkennungen, wobei für jede Sequenz und/oder Sequenzkennung auf der zweiten Liste (4) die jeweilige Sequenz ein zweites Tag hat,
in Form einer Vektordatenbanktabelle (1), die im Arbeitsspeicher gespeichert werden soll;
- Führen des Sprachenmodells (5), um Ausgaben zu erzeugen, die die Regeln der kontextfreien Grammatik entsprechend der gegebenen kontextfreien Sprache erfüllen, durch:
(4.1) Empfangen einer Anfrage für eine Antwort, wobei die Antwort eine Tokensequenz ist;
(4.2) Erzeugen einer neuen Tokensequenz basierend auf der Anfrage, unter Berücksichtigung von Informationen aus der gespeicherten Vektordatenbanktabelle (1), um zu gewährleisten, dass die neue Tokensequenz die Regeln der kontextfreien Grammatik erfüllt;
(4.3) Ausgabe der neuen Tokensequenz.

2. Eine Vektordatenbanktabelle (1), welche nach dem Verfahren gemäß Anspruch 1 für ein gegebenes Sprachenmodell (5) mit einem Tokenraum (6) und eine gegebene kontextfreie Sprache mit einer entsprechenden kontextfreien Grammatik erhalten wird, wobei die Vektordatenbanktabelle (1) Folgendes aufweist:
- mindestens eine Abbildung aus einer Tokensequenz aus dem Tokenraum (6) und/oder mindestens einer entsprechenden Sequenzkennung zusammen mit mindestens einem der jeweiligen Sequenz zugewiesenen Tag, wobei das Tag die jeweilige Sequenz als akzeptiert kennzeichnet, wenn diese Sequenz die Regeln der kontextfreien Grammatik erfüllt, und andernfalls die jeweilige Sequenz als zurückgewiesen kennzeichnet, wenn diese Sequenz gegen die Regeln der kontextfreien Grammatik verstößt, und/oder
- eine erste Liste (3), aufweisend mindestens eine Tokensequenz aus dem Tokenraum (6) und/oder mindestens einen entsprechende Sequenzkennung, wobei jede Sequenz und/oder Sequenzkennung auf der ersten Liste (3) die Regeln der kontextfreien Grammatik erfüllt, und/oder
- eine zweite Liste (4), aufweisend mindestens eine Tokensequenz aus dem Tokenraum (6) und/oder mindestens eine entsprechende Sequenzkennung, wobei jede Sequenz und/oder Sequenzkennung auf der zweiten Liste (4) gegen die Regeln der kontextfreien Grammatik verstößt.

3. Verfahren gemäß Anspruch 1, wobei der Erzeugungsschritt 4.2 folgende Schritte enthält:
(5.1) Erzeugen einer Zwischen-Tokensequenz basierend auf der Anfrage;
(5.2) Überprüfen mittels der Vektordatenbanktabelle (1), ob die Zwischen-Tokensequenz ein erstes oder ein zweites Tag hat oder in der ersten (3) oder zweiten Liste (4) enthalten ist;
(5.3) wenn die Zwischen-Tokensequenz ein erstes Tag hat oder in der ersten Liste (3) enthalten ist, Definieren der Zwischen-Tokensequenz als die neue Tokensequenz; andernfalls wenn die Zwischen-Tokensequenz ein zweites Tag hat oder in der zweiten Liste (4) enthalten ist, Zurückweisen der Zwischensequenz und Wiederholen der Schritte 5.1 bis 5.3, um eine weitere Zwischensequenz zu erzeugen und zu überprüfen.

4. Verfahren gemäß Anspruch 1 oder 3,
wobei Tokensequenzen iterativ basierend auf der Anfrage erzeugt werden,
wobei die Anfrage zunächst in eine anfängliche Tokensequenz übersetzt wird und in jedem Iterationsschritt das nächste Token der aktuellen Sequenz vorhergesagt und zur aktuellen Sequenz hinzugefügt wird, sodass die Länge der Sequenz erhöht wird,
wobei wenn in einem Iterationsschritt ein spezielles Sequenzende-Token vorhergesagt wird oder ein anderes Stoppkriterium erfüllt ist, die Iteration gestoppt wird und die aktuelle Sequenz ausgegeben wird.

5. Verfahren gemäß Anspruch 4,
wobei in jedem Iterationsschritt mittels der Vektordatenbanktabelle (1) geprüft wird, ob die aktuelle Tokensequenz ein erstes oder ein zweites Tag hat oder in der ersten Liste (3) oder der zweiten Liste (4) enthalten ist;
wobei, falls die aktuelle Tokensequenz ein zweites Tag hat oder in der zweiten Liste (4) enthalten ist, das Token, das der aktuellen Tokensequenz im letzten Iterationsschritt hinzugefügt wurde, aus der aktuellen Tokensequenz entfernt wird, bevor der nächste Iterationsschritt durchgeführt wird.

6. Verfahren gemäß Anspruch 4 oder 5,
wobei in jedem Iterationsschritt mittels eines PDA-Akzeptors (17) geprüft wird, ob ein gegebener Eintrag aus der Vektordatenbanktabelle (1) ein erstes oder zweites Tag ist oder in der ersten Liste (3) oder zweiten Liste (4) enthalten ist, ohne dass das Tag in der Vektordatenbanktabelle (1) gespeichert sein muss;
wobei, falls die aktuelle Tokensequenz ein zweites Tag besitzt oder in der zweiten Liste (4) enthalten ist, das Token, das der aktuellen Tokensequenz im letzten Iterationsschritt hinzugefügt wurde, aus der aktuellen Tokensequenz entfernt wird, bevor der nächste Iterationsschritt durchgeführt wird.

7. Verfahren gemäß Anspruch 4 oder 5,
wobei in jedem Iterationsschritt der Tokenraum (6) zur Vorhersage des nächsten Tokens der aktuellen Tokensequenz vor der Vorhersage des nächsten Tokens beschnitten wird;
wobei die Beschneidung des Tokenraums (6) das Ausschließen von Tokens aus dem Tokenraum (6) aufweist, sodass im beschnittenen Tokenraum (16) nur noch gültige Tokens verbleiben;
wobei ein Token ein gültiges Token ist, wenn das Hinzufügen dieses Tokens zur aktuellen Tokensequenz zu einer Tokensequenz führt, die ein erstes Tag hat oder in der ersten Liste (3) der Vektordatenbanktabelle (1) enthalten ist;
wobei nach dem Beschneiden des Tokenraums (6) die Vorhersage des nächsten Tokens über den beschnittenen Tokenraum (16) durch Überschreiben der Sampling-Strategie des Sprachmodells (5) aus den Logit-Ausgaben des Modells durchgeführt wird.

8. Verfahren gemäß einem der Ansprüche 3 bis 7, wobei, wenn mittels der Vektordatenbanktabelle (1) geprüft wird, ob eine Tokensequenz ein erstes oder zweites Tag hat oder in der ersten (3) oder zweiten Liste (4) enthalten ist, diese Sequenz zusammen mit ihrem zugewiesenen Tag an das Sprachmodell (5) zurückgeführt wird.

9. Das Verfahren gemäß Anspruch 1 und 3 bis 8 oder die Datenbanktabelle gemäß Anspruch 2, wobei die kontextfreie Sprache und die entsprechende kontextfreie Grammatik eine Datenbanksprache darstellen.

10. Verfahren gemäß Anspruch 9 und einem der Ansprüche 1 und 3 bis 8, wobei die Ausgabe des Sprachmodells (5) Quellcode in der Datenbanksprache ist, welche Folgendes ermöglicht und/oder für Folgendes konfiguriert ist:
- Manipulation eines Datenbankschemas, und/oder
- Durchführung von Erstellen, Lesen, Aktualisieren und Löschen, CRUD-Anwendungen, und/oder
- Manipulation von Daten in einem rollenbasierten Zugriffsmanagementsystem und/oder
- Erzeugen von Benutzerschnittstellen, die in CRUD-Anwendungen und rollenbasiertes Zugriffsmanagement integriert sind.

11. Das Verfahren gemäß einem der Ansprüche 1 und 3 bis 10 oder die Datenbanktabelle aus Anspruch 2, wobei die kontextfreie Sprache und die entsprechende kontextfreie Grammatik eine Programmiersprache darstellen.

12. Verfahren gemäß Anspruch 11 und einem der Ansprüche 1 und 3 bis 10, wobei die Ausgabe des Sprachmodells (5) Quellcode in der Programmiersprache ist, welche Folgendes ermöglicht und/oder für Folgendes konfiguriert ist:
- Interprozesskommunikation, und/oder
- Kommunikation zwischen Maschinen, und/oder
- Erzeugen und Nutzen von Kommunikationsprotokollen.

13. Verfahren gemäß einem der vorhergehenden Verfahrensansprüche, weiterhin aufweisend die folgenden Schritte:
- Erstellen der kontextfreien Grammatik unter Verwendung von API-Beschreibungen zum Weiterentwickeln dieser APIs, und/oder
- Umwandeln der kontextfreien Grammatik in einen Kellerautomaten, der so konfiguriert ist, dass er die der kontextfreien Grammatik entsprechende kontextfreie Sprache erkennt.

14. Verfahren gemäß Anspruch 13, weiterhin aufweisend den Schritt des Erzeugens neuer APIs basierend auf der Eingabe in das Sprachmodell (5) und bestehender Akzeptoren, die einen anderen Dienst beschreiben.

## Revendications

1. Procédé de génération et d'utilisation d'une table de base de données vectorielle (1) destinée à valider une séquence de jetons générée par une intelligence artificielle sur la base d'un modèle de langage donné (5) comportant un espace de jetons (6) et une longueur finie maximale donnée de la séquence de jetons de sortie, le procédé comprenant :
- la définition d'un langage indépendant du contexte avec une grammaire indépendante du contexte correspondante ;
- la conversion de la grammaire indépendante du contexte en un automate à pile qui est configuré pour reconnaître le langage indépendant du contexte ;
- l'utilisation de l'automate à pile pour mapper une séquence de jetons de l'espace de jetons (6) avec un ensemble d'états de l'automate à pile, dans lequel la longueur de chacune des séquences est inférieure ou égale à la longueur finie maximale et dans lequel une séquence de jetons se voit attribuer une première balise, qui identifie cette séquence comme acceptée, si cette séquence apparaît dans les états de l'automate à pile et/ou est acceptée par l'automate à pile, et, dans le cas contraire, la séquence se voit attribuer une deuxième balise, qui identifie cette séquence comme rejetée, si cette séquence n'apparaît pas dans les états de l'automate à pile et/ou est rejetée par l'automate à pile ;
- la sauvegarde
• d'une liste comprenant toutes les séquences de jetons issues de l'espace de jetons et/ou les identifiants de séquence correspondants, conjointement avec au moins la balise attribuée à la séquence respective, et/ou
• d'une première liste (3) comprenant les séquences issues de toutes les séquences de jetons de l'espace de jetons et/ou les identifiants de séquence correspondants, dans lequel, pour chaque séquence et/ou identifiant de séquence figurant sur la première liste (3), la séquence respective possède une première balise, et/ou
• d'une deuxième liste (4) comprenant les séquences issues de toutes les séquences de jetons de l'espace de jetons et/ou les identifiants de séquence correspondants, dans lequel pour chaque séquence et/ou identifiant de séquence figurant sur la deuxième liste (4), la séquence respective possède une deuxième balise,
sous la forme d'une table de base de données vectorielle (1) à stocker en mémoire ;
- le guidage du modèle de langage (5) pour générer des sorties qui sont conformes aux règles de la grammaire indépendante du contexte correspondant au langage indépendant du contexte donné par :
(4.1) réception d'une demande de réponse où la réponse est une séquence de jetons ;
(4.2) génération d'une nouvelle séquence de jetons sur la base de la demande tout en tenant compte d'informations provenant de la table de base de données vectorielle (1) sauvegardée afin de garantir que la nouvelle séquence de jetons soit conforme aux règles de la grammaire indépendante du contexte ;
(4.3) fourniture en sortie de la nouvelle séquence de jetons.

2. Table de base de données vectorielle (1), obtenue par le procédé selon la revendication 1 pour un modèle de langage donné (5) comportant un espace de jetons (6) et un langage indépendant du contexte donné avec une grammaire indépendante du contexte correspondante, la table de base de données vectorielle (1) comprenant :
- au moins un mappage entre une séquence de jetons issue de l'espace de jetons (6) et/ou au moins un identifiant de séquence correspondant conjointement avec au moins une balise attribuée à la séquence respective, dans laquelle la balise identifie la séquence respective comme acceptée, si cette séquence est conforme aux règles de la grammaire indépendante du contexte, et dans le cas contraire identifie la séquence respective comme rejetée, si cette séquence enfreint les règles de la grammaire indépendante du contexte, et/ou
- une première liste (3) comprenant au moins une séquence de jetons issue de l'espace de jetons (6) et/ou au moins un identifiant de séquence correspondant, dans laquelle chaque séquence et/ou identifiant de séquence figurant sur la première liste (3) est conforme aux règles de la grammaire indépendante du contexte, et/ou
- une deuxième liste (4) comprenant au moins une séquence de jetons issue de l'espace de jetons (6) et/ou au moins un identifiant de séquence correspondant, dans laquelle chaque séquence et/ou identifiant de séquence figurant sur la deuxième liste (4) enfreint les règles de la grammaire indépendante du contexte.

3. Procédé selon la revendication 1, dans lequel l'étape de génération 4.2 comprend les étapes suivantes :
(5.1) génération d'une séquence intermédiaire de jetons sur la base de la demande ;
(5.2) fait de vérifier via la table de base de données vectorielle (1) si la séquence intermédiaire de jetons comporte une première ou une deuxième balise ou si elle figure dans la première liste (3) ou la deuxième liste (4) ;
(5.3) si la séquence intermédiaire de jetons comporte une première balise ou figure dans la première liste (3), définition de la séquence intermédiaire de jetons comme étant la nouvelle séquence de jetons, sinon, si la séquence intermédiaire de jetons comporte une deuxième balise ou figure dans la deuxième liste (4), rejet de la séquence intermédiaire et répétition des étapes 5.1 à 5.3 pour générer et vérifier une autre séquence intermédiaire.

4. Procédé selon la revendication 1 ou 3,
dans lequel des séquences de jetons sont générées de manière itérative sur la base de la demande,
dans lequel, initialement, la demande est traduite en une séquence initiale de jetons et, à chaque étape d'itération, le jeton suivant de la séquence courante est prédit et ajouté à la séquence courante, de sorte que la longueur de la séquence est augmentée,
dans lequel si, lors d'une étape d'itération, un jeton spécial de fin de séquence est prédit ou si un autre critère d'arrêt est satisfait, l'itération est arrêtée et la séquence courante est fournie en sortie.

5. Procédé selon la revendication 4,
dans lequel, à chaque étape d'itération, il est vérifié via la table de base de données vectorielle (1) si la séquence courante de jetons comporte une première ou une deuxième balise ou si elle figure dans la première liste (3) ou la deuxième liste (4) ;
dans lequel, si la séquence courante de jetons comporte une deuxième balise ou figure dans la deuxième liste (4), le jeton ajouté à la séquence courante de jetons lors de la étape d'itération la plus récente est retiré de la séquence courante de jetons avant que l'étape d'itération suivante ne soit effectuée.

6. Procédé selon la revendication 4 ou 5,
dans lequel, à chaque étape d'itération, on vérifie via un accepteur de PDA (17) qu'une entrée donnée de la table de base de données vectorielle (1) est une première ou une deuxième balise ou figure dans la première liste (3) ou la deuxième liste (4) sans qu'il soit nécessaire que la balise soit stockée dans la table de base de données vectorielle (1) ;
dans lequel, si la séquence courante de jetons comporte une deuxième balise ou figure dans la deuxième liste (4), le jeton ajouté à la séquence courante de jetons lors de la étape d'itération la plus récente est retiré de la séquence courante de jetons avant que l'étape d'itération suivante ne soit effectuée.

7. Procédé selon la revendication 4 ou 5,
dans lequel, à chaque étape d'itération, l'espace de jetons (6) servant à prédire le jeton suivant de la séquence courante de jetons est élagué avant prédiction du jeton suivant ;
dans lequel l'élagage de l'espace de jetons (6) comprend l'exclusion de jetons de l'espace de jetons (6), de sorte que seuls les jetons valides restent dans l'espace de jetons élagué (16) ;
dans lequel un jeton est un jeton valide si l'ajout de ce jeton à la séquence courante de jetons aboutit à une séquence de jetons qui comporte une première balise ou qui figure dans la première liste (3) de la table de base de données vectorielle (1) ;
dans lequel, après élagage de l'espace de jetons (6), la prédiction du jeton suivant est effectuée sur l'espace de jetons élagué (16) en annulant et remplaçant la stratégie d'échantillonnage du modèle de langage (5) des sorties logits du modèle.

8. Procédé selon l'une des revendications 3 à 7, dans lequel, lorsqu'il est vérifié via la table de base de données vectorielle (1) si une séquence de jetons comporte une première ou une deuxième balise ou figure dans la première (3) ou la deuxième liste (4), cette séquence conjointement avec la balise qui lui est attribuée est renvoyée au modèle de langage (5).

9. Procédé selon l'une quelconque des revendications 1 et 3 à 8 ou table de base de données vectorielle selon la revendication 2, dans lequel ou laquelle le langage indépendant du contexte et la grammaire indépendante du contexte correspondante représentent un langage de base de données.

10. Procédé selon la revendication 9 et l'une des revendications 1 et 3 à 8, dans lequel la sortie du modèle de langage (5) est un code source dans le langage de base de données qui permet et/ou est configuré pour
- la manipulation d'un schéma de base de données, et/ou
- l'exécution d'applications de création, lecture, mise à jour et suppression (CRUD), et/ou
- la manipulation de données dans un système de gestion des accès basée sur les rôles, et/ou
- la génération d'interfaces utilisateur intégrées aux applications CRUD et de la gestion des accès basée sur les rôles.

11. Procédé selon l'une quelconque des revendications 1 et 3 à 10 de la table de base de données vectorielle de la revendication 2, dans lequel le langage indépendant du contexte et la grammaire indépendante du contexte correspondante représentent un langage de programmation.

12. Procédé selon la revendication 11 et l'une des revendications 1 et 3 à 10, dans lequel la sortie du modèle de langage (5) est un code source dans le langage de programmation qui permet et/ou est configuré pour
- la communication inter-processus, et/ou
- la communication inter-machines, et/ou
- la génération et la consommation de protocoles de communication.

13. Procédé selon l'une quelconque des revendications de procédé précédentes, comprenant en outre les étapes de
- création de la grammaire indépendante du contexte en utilisant des descriptions d'API pour développer plus avant ces API et/ou
- conversion de la grammaire indépendante du contexte en un automate à pile qui est configuré pour reconnaître le langage indépendant du contexte correspondant à la grammaire indépendante du contexte.

14. Procédé selon la revendication 13, comprenant en outre l'étape de
génération de nouvelles API sur la base de l'entrée dans le modèle de langage (5) et d'accepteurs existants décrivant un autre service.
